# EUROPÄISCHE PATENTSCHRIFT

(11) **EP 3 227 938 B1**
(45) Veröffentlichungstag und Bekanntmachung des Hinweises auf die Patenterteilung: **24.04.2019**
(21) Anmeldenummer: 15775443.3
(22) Anmeldetag: 06.10.2015
(51) Int. Cl.: B62M 6/90, H01M 10/625, H01M 10/6555, H01M 10/643, H01M 10/6554, H01M 2/10

(54) **ELEKTROFAHRRAD**
ELECTRIC BICYCLE
VÉLO ÉLECTRIQUE

(30) Priorität: 04.12.2014 DE 102014224907
(43) Veröffentlichungstag der Anmeldung: 11.10.2017
(73) Patentinhaber: Robert Bosch GmbH, 70442 Stuttgart (DE)
(72) Erfinder: JABS, Volker, 72144 Dusslingen (DE); MAIER, Simone, 72070 Tuebingen (DE); SCHUMACHER, Christoph, 72144 Dusslingen (DE)
(86) Internationale Anmeldenummer: PCT/EP2015/072984
(87) Internationale Veröffentlichungsnummer: WO 2016/087088

(56) Entgegenhaltungen:
- EP-A1- 1 274 137
- DE-A1-102010 009 063
- DE-A1-102011 103 984
- JP-A- 2002 134 177
- US-A1- 2012 003 522
- US-A1- 2012 064 386

## Beschreibung

### Stand der Technik

Die vorliegende Erfindung betrifft eine Batterie mit einem verbesserten Wärmemanagement und ferner ein mit Muskelkraft und/oder Motorkraft betreibbares Fahrzeug, insbesondere ein Elektrofahrrad, mit einer erfindungsgemäßen Batterie. Die erfindungsgemäße Batterie kann dabei eine nicht wiederaufladbare Batterie oder eine wiederaufladbare Batterie (Akkumulator) sein.

Batterien sind aus dem Stand der Technik, wie beispielsweise in US 2012/0064386 A1 beschrieben, in unterschiedlichen Ausgestaltungen bekannt. Beispielsweise bei Elektrofahrrädern sind Batterien vorgesehen, welche wieder aufladbar sind, wobei eine Vielzahl von Batteriezellen in einem Kunststoffgehäuse angeordnet sind. Während des Betriebes erzeugen die Batteriezellen Wärme. Die Batteriezellen werden dabei mittels Konvektion entwärmt. Aufgrund des stetig sich weiterentwickelnden Standes der Technik hinsichtlich Batterien ergeben sich ständig höhere Kapazitäten, wodurch auch eine höhere Entwärmung bei Verwendung und beim Laden der Batterien notwendig wird. Von daher besteht eine Notwendigkeit, neuartige Entwärmkonzepte vorzusehen.

### Offenbarung der Erfindung

Das erfindungsgemäße Elektrofahrrad mit den Merkmalen des Anspruchs 1 weist demgegenüber den Vorteil auf, dass auch bei einer höheren Kapazität der Batterie eine sichere Entwärmung der Batterie notwendig ist. Dadurch kann eine verbesserte Leistung während des Betriebes sichergestellt werden und ferner auch eine Lebensdauer der Batterien signifikant verlängert werden. Erfindungsgemäß umfasst die Batterie dabei eine Vielzahl von Batteriezellen und ein Gehäuse, in welchem die Batteriezellen angeordnet sind. Ferner ist ein Wärmeleitstreifen vorgesehen, welcher zwischen den Batteriezellen angeordnet ist und wenigstens eine der Batteriezellen berührt. Der Wärmeleitstreifen weist dabei einen Wärmeableitbereich auf, welcher für einen Kontakt mit einem wärmeableitenden Element eingerichtet ist. Somit wird Wärme, welche im Betrieb oder beim Laden in den Batteriezellen entsteht, auf den Wärmeleitstreifen übertragen und vom Wärmeleitstreifen am Wärmeableitbereich wieder abgegeben. Der Wärmeableitbereich steht mit einem Rahmenrohr des Elektrofahrrads direkt oder indirekt in Verbindung.

Da das Rahmenrohr deutlich kühler als die Batteriezellen ist, kann eine sehr gute Entwärmung der Batteriezellen über den Wärmeleitstreifen erfolgen. Der Wärmeleitstreifen ist vorzugsweise aus einem metallischen Material hergestellt, und weist eine sehr gute Wärmeleiteigenschaft auf. Somit kann mittels des Wärmeleitstreifens Wärme vom Inneren der Batterie zur Außenseite geleitet werden. Durch die Wärmeleitung kann viel besser Wärme von den Batteriezellen abgeleitet werden, als beispielsweise durch Konvektion oder Wärmestrahlung.

Das Elektrofahrrad umfasst ferner wenigstens ein Federelement, welches mit dem wärmeableitenden Element der Batterie in Verbindung steht. Damit kann Wärme vom wärmeableitenden Element der Batterie auf das Federelement übertragen werden. Vom Federelement kann dann die Wärme an den Rahmen des Elektrofahrrads abgegeben werden.

Die Unteransprüche zeigen bevorzugte Weiterbildungen der Erfindung. Vorzugsweise ist das wärmeableitende Element in das Gehäuse integriert. Dadurch kann das Gehäuse aus verschiedenen Materialien hergestellt werden und trotzdem eine sichere Wärmeableitung über das integrierte, wärmeableitende Element erreicht werden. Das wärmeableitende Element ist besonders bevorzugt ein erstes plattenförmiges Element. Die Verwendung eines plattenförmigen Elements hat den Vorteil, dass eine große Wärmeabgabefläche vorgesehen ist, so dass eine sichere und schnelle Wärmeableitung möglich ist. Der Wärmeleitstreifen ist dabei mit seinem Wärmeableitbereich mit dem ersten plattenförmigen Element in Kontakt.

Weiter bevorzugt umfasst das Gehäuse einen Kunststoffhauptkörper, wobei zwischen dem Kunststoffhauptkörper und dem wärmeableitenden Element eine Dichtung angeordnet ist. Die Dichtung ist vorzugsweise umlaufend vorgesehen und stellt sicher, dass keine Feuchtigkeit oder Staub oder dgl. ins Innere der Batterie gelangen.

Gemäß einer weiteren bevorzugten Ausgestaltung der vorliegenden Erfindung umfasst die Batterie ferner ein zweites plattenförmiges Element, welches am ersten plattenförmigen Element befestigt ist. Durch diese Maßnahmen ist es möglich, eine standardisierte Batterie mit einem Gehäuse mit einem ersten standardisierten wärmeableitenden Element vorzusehen und für die jeweiligen Einsatzzwecke das zweite, plattenförmige Element individuell anzupassen. Dadurch können die Herstellkosten für die Batterien signifikant reduziert werden. Das zweite plattenförmige Element wird vorzugsweise mittels Schrauben oder dgl. am ersten plattenförmigen Element fixiert.

Das Federelement ist vorzugsweise aus einem Metallmaterial hergestellt, insbesondere Federstahl, um einerseits federnde Eigenschaften und andererseits eine gute Wärmeleitfähigkeit aufzuweisen. Das Federelement ist vorzugsweise eine Zylinderfeder oder eine Blattfeder. Es sei weiterhin angemerkt, dass weiter bevorzugt auch mehrere Federelemente vorgesehen werden können, um eine Wärmeableitung zu verbessern.

Um eine möglichst sichere Wärmeableitung von den Batteriezellen der Batterie zu erreichen, weist der Wärmeleitstreifen einen Kontaktbereich auf, welcher wenigstens 20% einer Mantelfläche der Batteriezelle kontaktiert. Dadurch kann eine sichere Wärmeableitung von der Batteriezelle auf den Wärmeleitstreifen und vom Wärmeleitstreifen dann auf das wärmeableitende Element erreicht werden. Besonders bevorzugt kontaktiert der Kontaktbereich des Wärmeleistreifens wenigstens 25% der Mantelfläche der Batteriezelle. Die Batteriezelle ist dabei besonders bevorzugt zylindrisch ausgebildet und der Kontaktbereich kontaktiert die Batteriezelle am zylindrischen Mantelbereich der Batteriezelle.

Ferner betrifft die vorliegende Erfindung ein mit Muskelkraft und/oder Motorkraft antreibbares Fahrzeug, insbesondere ein Elektrofahrrad, umfassend eine erfindungsgemäße Batterie. Die Batterie ist dabei besonders bevorzugt am Rahmen des Fahrzeugs angeordnet, so dass eine große Wärmesenke durch den Rahmen des Fahrzeugs vorhanden.

Weiter bevorzugt sind mehrere Wärmeleitstreifen in der Batterie angeordnet, wobei ferner bevorzugt wenigstens zwei Wärmeleitstreifen eine Batteriezelle kontaktieren. Dadurch kann eine Kontaktfläche der Batteriezellen weiter vergrößert werden.

### Zeichnung

Nachfolgend werden bevorzugte Ausführungsbeispiele der Erfindung unter Bezugnahme auf die begleitende Zeichnung im Detail beschrieben. In der Zeichnung sind gleiche bzw. funktional gleiche Bauteile jeweils mit den gleichen Bezugszeichen bezeichnet. In der Zeichnung ist:
- Figur 1: eine schematische Ansicht eines Elektrofahrrads mit einer erfindungsgemäßen Batterie gemäß einem ersten Ausführungsbeispiel der Erfindung,
- Figur 2: eine schematische Schnittansicht der Batterie von Figur 1 in vergrößerter Darstellung,
- Figur 3: eine schematische Schnittansicht einer Batterie gemäß einem zweiten Ausführungsbeispiel der Erfindung,
- Figur 4: eine schematische Schnittansicht einer Batterie gemäß einem dritten Ausführungsbeispiel der Erfindung, und
- Figur 5: eine schematische Schnittansicht einer Batterie gemäß einem vierten Ausführungsbeispiel der Erfindung.

### Ausführungsformen der Erfindung

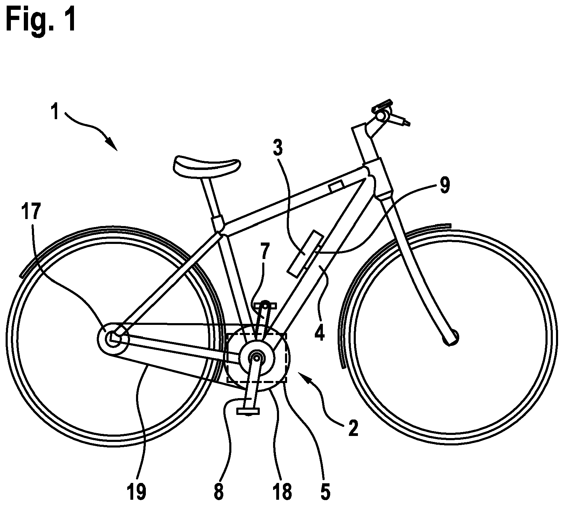

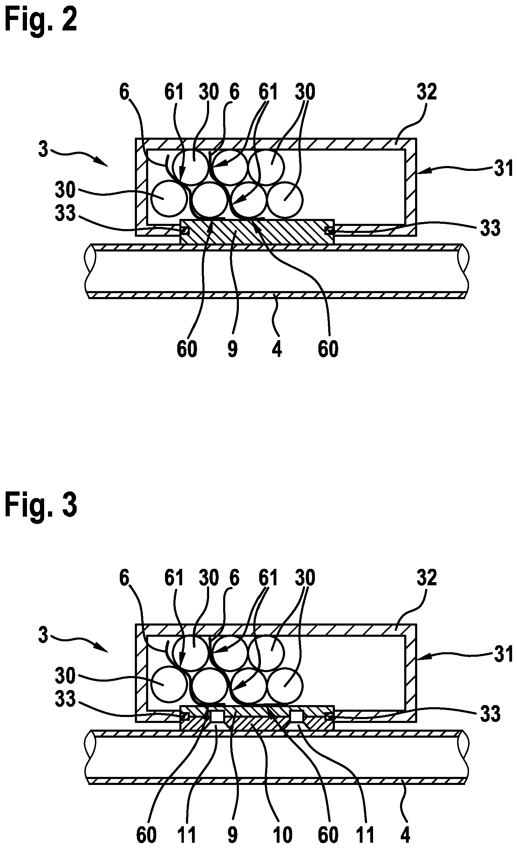

Nachfolgend wird unter Bezugnahme auf die Figuren 1 und 2 ein Elektrofahrrad 1 mit einer erfindungsgemäßen Batterie 3 beschrieben. Es sei angemerkt, dass erfindungsgemäß unter dem Begriff "Batterie" sowohl nicht wieder aufladbare Batterien als auch wiederaufladbare Batterien zu verstehen sind.

Wie aus Figur 1 ersichtlich ist, umfasst das Elektrofahrrad 1 einen Kurbeltrieb 2 mit zwei Kurbel 7, 8, an welchen Pedale angeordnet sind. Ein elektrischer Antrieb 5 ist im Kurbeltrieb 2 integriert. An einem Hinterrad ist eine Gangschaltung 17 angeordnet, wobei am Kurbeltrieb ein Kettenblatt 18 vorgesehen ist, so dass über eine Kette 19 die Antriebskraft auf das Hinterrad übertragen werden kann.

Zur Energieversorgung des elektrischen Antriebs 5 ist eine Batterie 3 vorgesehen. Die Batterie 3 ist an einem Rahmen des Elektrofahrrads 1, genauer an einem Unterrohr 4, befestigt.

Die Batterie 3 ist im Detail aus Figur 2 ersichtlich. Die Batterie 3 umfasst eine Vielzahl von Batteriezellen 30 sowie ein Gehäuse 31. Die Batteriezellen 30 sind zylindrisch und in zwei Reihen angeordnet, wobei die untere Reihe zur oberen Reihe versetzt vorgesehen ist.

Das Gehäuse 31 umfasst einen Kunststoffhauptkörper 32 sowie ein erstes plattenförmiges, wärmeableitendes Element 9. Das wärmeableitende Element 9 verschließt dabei eine Öffnung des Kunststoffhauptkörpers 32 vollständig. Zwischen dem Kunststoffhauptkörper 32 und dem wärmeableitenden Element 9 ist eine umlaufende Dichtung 33 vorgesehen.

Wie aus Figur 2 ersichtlich ist, befindet sich das erste plattenförmige Element 9 in direktem Kontakt mit dem Unterrohr 4 des Rahmens des Elektrofahrrads. Vorzugsweise ist die zum Unterrohr 4 gerichtete Seite des ersten plattenförmigen Elements 9 ebenfalls bogenförmig im Schnitt ausgestaltet, so dass die Außenseite des ersten plattenförmigen Elements 9 unmittelbar am Unterrohr 4 anliegt. Dadurch wird eine große Kontaktfläche zwischen dem wärmeableitenden Element 9 und dem Unterrohr 4 erhalten.

Die Batterie 3 umfasst ferner mehrere Wärmeleitstreifen 6, welche, wie aus Figur 2 ersichtlich ist, zwischen den Batteriezellen 30 angeordnet sind. Dabei befindet sich ein Kontaktbereich 61 der Wärmeleitstreifen 6 mit den Batteriezellen in Kontakt. Der Kontaktbereich 61 deckt dabei vorzugsweise ungefähr 20% einer Oberfläche der zylindrischen Batteriezellen 30 ab. Die Wärmeleitstreifen 6 umfassen ferner Wärmeableitbereiche 60, welche mit dem wärmeableitenden Element 9 in Kontakt sind. Somit kann Wärme, welche im Betrieb in den Batteriezellen 30 entsteht, über den Kontaktbereich 61 in den Wärmeleitstreifen 6 übergeleitet werden und vom Wärmeleitstreifen 6 über den Wärmeableitbereich 60 in das wärmeableitende Element 9 geleitet werden. Vom wärmeableitenden Element 9 kann die Wärme dann auf das Unterrohr 4 übertragen werden.

Wie aus Figur 2 ersichtlich ist, sind mehrere Wärmeleitstreifen 6 zwischen den Batteriezellen 30 angeordnet. Dabei kontaktieren auch zwei verschiedene Wärmeleitstreifen 6 jeweils eine gleiche Batteriezelle 6, so dass eine Kontaktfläche zwischen der Batteriezelle und den Wärmeleitstreifen verdoppelt werden kann.

Somit kann erfindungsgemäß eine verbesserte Entwärmung von Batteriezellen 30 mittels Wärmeleitung erreicht werden. Die Wärmeleitstreifen 6 können gezielt zwischen die Batteriezellen 30 eingelegt werden und somit eine effektive Kühlung der Batteriezellen 30 ermöglichen. Die Wärme wird dann über das wärmeableitende Element 9 in den Rahmen des Elektrofahrrads übertragen, welcher eine große Wärmesenke darstellt.

Es sei angemerkt, dass statt des wärmeleitenden Elements 9 auch die Wärmeleitstreifen 6 direkt mit dem Rahmen des Elektrofahrrads 1 verbunden werden können.

Figur 3 zeigt eine Batterie 3 gemäß einem zweiten Ausführungsbeispiel der Erfindung. Im Unterschied zum ersten Ausführungsbeispiel weist die Batterie 3 des zweiten Ausführungsbeispiels ein erstes plattenförmiges, wärmeableitendes Element 9 und ein zweites plattenförmiges, wärmeableitendes Element 10 auf. Hierbei sind die beiden plattenförmigen Elemente 9, 10 mittels Fixierschrauben 11 miteinander verbunden. Wärme von den Batteriezellen 30 wird somit über die Wärmeleitstreifen 6 auf das erste plattenförmige Element 9 und vom ersten plattenförmigen Element 9 auf das zweite plattenförmige Element 10 übertragen. Das zweite plattenförmige Element 10 befindet sich dann in direktem Kontakt mit dem Unterrohr 4 des Rahmens des Elektrofahrrads.

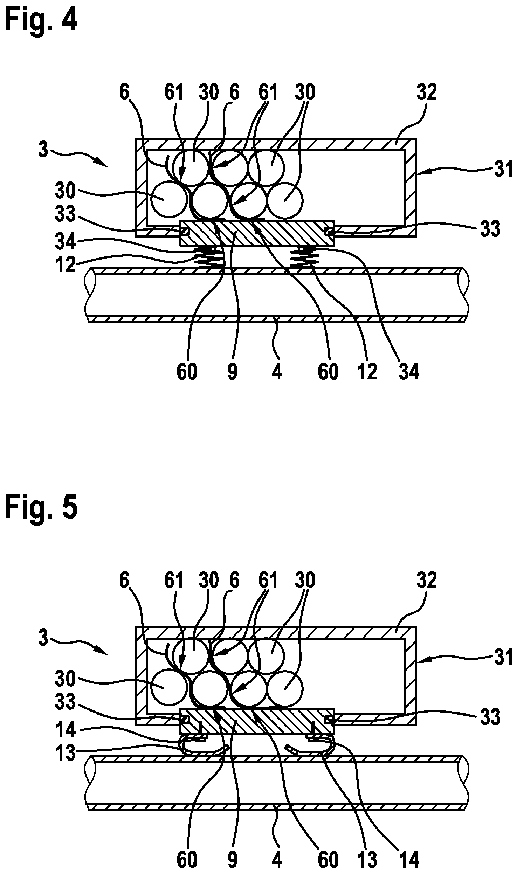

Figur 4 zeigt eine Batterie 3 gemäß einem dritten Ausführungsbeispiel der Erfindung. Das dritte Ausführungsbeispiel ist ähnlich wie das erste Ausführungsbeispiel, wobei zusätzlich noch zwischen dem plattenförmigen, wärmeableitenden Element 9 und dem Unterrohr 4 Federelemente 12 vorgesehen sind. Die Federelemente 12 sind in diesem Ausführungsbeispiel zylindrische Schraubenfedern. Wie aus Figur 4 ersichtlich ist, sind an der zum Unterrohr 4 gerichteten Seite des plattenförmigen, wärmeableitenden Elements 9 Zapfen 34 vorgesehen, um die Zylinderfedern zu zentrieren. Hierdurch kann eine Schwingungsdämpfung der Batterie 3 erreicht werden, da die Federelemente Schwingungen vom Rahmen nicht unmittelbar auf die Batterie 3 übertragen.

Figur 5 zeigt eine Batterie 3 gemäß einem vierten Ausführungsbeispiel der Erfindung. Hierbei sind ebenfalls Federelemente zwischen der Batterie 3 und dem Unterrohr 4 vorgesehen, wobei im vierten Ausführungsbeispiel die Federelemente als Blattfedern 13 ausgebildet sind. Die Blattfedern 13 sind mittels Bolzen 14 am plattenförmigen, wärmeableitenden Element 9 der Batterie 3 verbunden.

Somit wird erfindungsgemäß, wie bei den Ausführungsbeispielen beschrieben, durch die eingelegten Wärmeleitstreifen 6 eine verbesserte Entwärmung der Batterie 3 erreicht, wobei trotzdem ein dichtes Batteriegehäuse vorgesehen werden kann. Die Wärme kann dann direkt über das wärmeableitende, plattenförmige Element 9 oder ein zweites plattenförmiges Element 10 oder Federelemente in einen Fahrradrahmen geleitet werden.

## Patentansprüche

1. Batterie, umfassend
- eine Vielzahl von Batteriezellen (30),
- ein Gehäuse (31), wobei die Batteriezellen (30) im Gehäuse (31) angeordnet sind, und
- wenigstens einen Wärmeleitstreifen (6), welcher zwischen den Batteriezellen (30) angeordnet ist und wenigstens eine der Batteriezellen (30) mittels eines Kontaktbereichs (61) berührt,
- wobei der Wärmeleitstreifen (6) einen Wärmeableitbereich (60) umfasst, welcher für einen Kontakt mit einem wärmeableitenden Element (9) eingerichtet ist.

2. Batterie nach Anspruch 1, **dadurch gekennzeichnet, dass** das wärmeableitende Element (9) in das Gehäuse (31) integriert ist.

3. Batterie nach Anspruch 2, **dadurch gekennzeichnet, dass** das wärmeableitende Element (9) ein erstes plattenförmiges Element ist.

4. Batterie nach einem der Ansprüche 2 oder 3, **dadurch gekennzeichnet, dass** das Gehäuse (31) einen Kunststoffhauptkörper (32) umfasst, wobei zwischen dem Kunststoffhauptkörper und dem wärmeableitenden Element (9) eine Dichtung (33) angeordnet ist und das wärmeableitende Element (9) eine Öffnung des Kunststoffhauptkörpers (32) verschließt.

5. Batterie nach Anspruch 3 oder 4, ferner umfassend ein zweites plattenförmiges Element (10), welches am ersten plattenförmigen Element fixiert ist.

6. Batterie nach einem der Ansprüche 2 bis 5, ferner umfassend wenigstens ein Federelement, welches mit dem wärmeableitenden Element (9) in Verbindung steht.

7. Batterie nach Anspruch 6, **dadurch gekennzeichnet, dass** das Federelement aus einem Metallmaterial, insbesondere Federstahl, hergestellt ist.

8. Batterie nach Anspruch 6 oder 7, **dadurch gekennzeichnet, dass** das Federelement eine Zylinderfeder (12) oder eine Blattfeder (13) ist.

9. Batterie nach einem der vorhergehenden Ansprüche, **dadurch gekennzeichnet, dass** der Kontaktbereich (61) des Wärmeleitstreifens (6) wenigstens 20% einer Oberfläche der Batteriezelle (30) kontaktiert, insbesondere 25% der Oberfläche der Batteriezelle (30) kontaktiert.

10. Batterie nach einem der vorhergehenden Ansprüche, **gekennzeichnet durch** eine Vielzahl von Wärmeleitstreifen (6), wobei wenigstens zwei Wärmeleitstreifen (6) eine gemeinsame Batteriezelle (30) kontaktieren.

11. Mit Muskelkraft und/oder Motorkraft antreibbares Fahrzeug, insbesondere Elektrofahrrad, umfassend einen elektrischen Antrieb (5) und eine Batterie (3) nach einem der vorhergehenden Ansprüche.

12. Fahrzeug nach Anspruch 11, **dadurch gekennzeichnet, dass** die Batterie (3) mit einem Rahmen, insbesondere einem Unterrohr (4), des Fahrzeugs in direktem Kontakt steht.
1. Elektrofahrrad, umfassend einen elektrischen Antrieb (5) und eine Batterie (3), wobei die Batterie folgende Komponenten umfasst
- eine Vielzahl von Batteriezellen (30),
- ein Gehäuse (31), wobei die Batteriezellen (30) im Gehäuse (31) angeordnet sind, und
- wenigstens einen Wärmeleitstreifen (6), welcher zwischen den Batteriezellen (30) angeordnet ist und wenigstens eine der Batteriezellen (30) mittels eines Kontaktbereichs (61) berührt,
- wobei der Wärmeleitstreifen (6) einen Wärmeableitbereich (60) umfasst, welcher für einen Kontakt mit einem wärmeableitenden Element (9) eingerichtet ist,
**dadurch gekennzeichnet, dass**
- ein Federelement (12, 13) mit dem wärmeableitenden Element (9) in Verbindung steht, und
- das Federelement (12, 13) zwischen dem wärmeableitenden Element (9) und einem Unterrohr (4) des Rahmens des Elektrofahrrads angeordnet ist, wobei Wärme von dem wärmeableitenden Element (9) an den Rahmen (4) abgegeben wird.
2. Elektrofahrrad nach Anspruch 1, **dadurch gekennzeichnet, dass** das wärmeableitende Element (9) in das Gehäuse (31) der Batterie (3) integriert ist.
3. Elektrofahrrad nach Anspruch 2, **dadurch gekennzeichnet, dass** das wärmeableitende Element (9) der Batterie (3) ein erstes plattenförmiges Element ist.
4. Elektrofahrrad nach einem der Ansprüche 2 oder 3, **dadurch gekennzeichnet, dass** das Gehäuse (31) der Batterie (3) einen Kunststoffhauptkörper (32) umfasst, wobei zwischen dem Kunststoffhauptkörper und dem wärmeableitenden Element (9) der Batterie (3) eine Dichtung (33) angeordnet ist und das wärmeableitende Element (9) eine Öffnung des Kunststoffhauptkörpers (32) verschließt.
5. Elektrofahrrad nach einem der vorhergehenden Ansprüche **dadurch gekennzeichnet, dass** das Federelement (12, 13) aus einem Metallmaterial, insbesondere Federstahl, hergestellt ist.
6. Elektrofahrrad nach einem der vorhergehenden Ansprüche, **dadurch gekennzeichnet, dass** das Federelement (12, 13) eine Zylinderfeder (12) oder eine Blattfeder (13) ist.
7. Elektrofahrrad nach einem der vorhergehenden Ansprüche, **dadurch gekennzeichnet, dass** der Kontaktbereich (61) des Wärmeleitstreifens (6) wenigstens 20% einer Oberfläche der Batteriezelle (30) kontaktiert, insbesondere 25% der Oberfläche der Batteriezelle (30) kontaktiert.
8. Elektrofahrrad nach einem der vorhergehenden Ansprüche, **gekennzeichnet durch** eine Vielzahl von Wärmeleitstreifen (6), wobei wenigstens zwei Wärmeleitstreifen (6) eine gemeinsame Batteriezelle (30) kontaktieren.
9. Elektrofahrrad nach einem der vorhergehenden Ansprüche , **dadurch gekennzeichnet, dass** die Batterie (3) mit einem Rahmen, insbesondere einem Unterrohr (4), des Fahrzeugs in direktem Kontakt steht.

## Claims

1. Battery, comprising
- a multiplicity of battery cells (30),
- a housing (31), the battery cells (30) being arranged in the housing (31), and
- at least one heat conduction strip (6) which is arranged between the battery cells (30) and makes contact with at least one of the battery cells (30) by means of a contact region (61),
- the heat conduction strip (6) comprising a heat dissipation region (60) which is set up for contact with a heat dissipating element (9).

2. Battery according to Claim 1, **characterized in that** the heat dissipating element (9) is integrated into the housing (31).

3. Battery according to Claim 2, **characterized in that** the heat dissipating element (9) is a first plate-shaped element.

4. Battery according to either of Claims 2 and 3, **characterized in that** the housing (31) comprises a plastic main body (32), a seal (33) being arranged between the plastic main body and the heat dissipating element (9), and the heat dissipating element (9) closing an opening of the plastic main body (32).

5. Battery according to Claim 3 or 4, comprising, furthermore, a second plate-shaped element (10) which is fixed on the first plate-shaped element.

6. Battery according to one of Claims 2 to 5, comprising, furthermore, at least one spring element which is connected to the heat dissipating element (9).

7. Battery according to Claim 6, **characterized in that** the spring element is produced from a metal material, in particular spring steel.

8. Battery according to Claim 6 or 7, **characterized in that** the spring element is a cylinder spring (12) or a leaf spring (13).

9. Battery according to one of the preceding claims, **characterized in that** the contact region (61) of the heat conduction strip (6) makes contact with at least 20% of a surface area of the battery cell (30), in particular makes contact with 25% of the surface area of the battery cell (30).

10. Battery according to one of the preceding claims, **characterized by** a multiplicity of heat conduction strips (6), at least two heat conduction strips (6) making contact with a common battery cell (30).

11. Vehicle which can be driven by muscle power and/or motor power, in particular electric bicycle, comprising an electric drive (5) and a battery (3) according to one of the preceding claims.

12. Vehicle according to Claim 11, **characterized in that** the battery (3) is in direct contact with a frame, in particular a down tube (4), of the vehicle.

## Revendications

1. Batterie, comprenant
- une pluralité de cellules de batterie (30),
- un boîtier (31), les cellules de batterie (30) étant disposées dans le boîtier (31), et
- au moins une bande thermoconductrice (6) disposée entre les cellules de batterie (30) et touchant au moins l'une des cellules de batterie (30) au moyen d'une région de contact (61),
- dans laquelle la bande thermoconductrice (6) comprend une région de dissipation thermique (60) conçue pour être en contact avec un élément de dissipation thermique (9).

2. Batterie selon la revendication 1, **caractérisée en ce que** l'élément de dissipation thermique (9) est intégré dans le boîtier (31).

3. Batterie selon la revendication 2, **caractérisée en ce que** l'élément de dissipation thermique (9) est un premier élément en forme de plaque.

4. Batterie selon l'une des revendications 2 ou 3, **caractérisée en ce que** le boîtier (31) comprend un corps principal en plastique (32), un joint d'étanchéité (33) étant disposé entre le corps principal en plastique et l'élément de dissipation thermique (9) et l'élément de dissipation thermique (9) fermant une ouverture du corps principal en plastique (32).

5. Batterie selon la revendication 3 ou 4, comprenant en outre un deuxième élément en forme de plaque (10) fixé au premier élément en forme de plaque.

6. Batterie selon l'une des revendications 2 à 5, comprenant en outre au moins un élément à ressort en liaison avec l'élément de dissipation thermique (9).

7. Batterie selon la revendication 6, **caractérisée en ce que** l'élément à ressort est réalisé en un matériau métallique, en particulier en acier à ressort.

8. Batterie selon la revendication 6 ou 7, **caractérisée en ce que** l'élément à ressort est un ressort cylindrique (12) ou un ressort à lame (13).

9. Batterie selon l'une des revendications précédentes, **caractérisée en ce que** la région de contact (61) de la bande thermoconductrice (6) est en contact avec au moins 20 % d'une surface de la cellule de batterie (30), en particulier avec 25 % de la surface de la cellule de batterie (30).

10. Batterie selon l'une des revendications précédentes, **caractérisée par** une pluralité de bandes thermoconductrices (6), au moins deux bandes thermoconductrices (6) étant en contact avec une cellule de batterie (30) commune.

11. Véhicule apte à être entraîné par la force musculaire et/ou par la puissance d'un moteur, en particulier vélo électrique, comprenant un entraînement électrique (5) et une batterie (3) selon l'une des revendications précédentes.

12. Véhicule selon la revendication 11, **caractérisé en ce que** la batterie (3) est en contact direct avec un cadre du véhicule, en particulier avec un tube de pédalier (4).
